# EUROPÄISCHE PATENTANMELDUNG

(11) **EP 2 228 248 A1**
(43) Veröffentlichungstag der Anmeldung: **15.09.2010**
(21) Anmeldenummer: 09003529.6
(22) Anmeldetag: 11.03.2009
(51) Int. Cl.: B60K 5/10, B62D 21/14, B62D 33/063, E02F 9/16, E02F 9/08

(54) **Fahrzeug mit einen drehbare Antriebseinheit**

(71) Anmelder: JR Design GmbH, 6331 Hünenberg (CH)
(72) Erfinder: Reutter, Josef, 72501 Gammertingen (DE)
(74) Vertreter: Weiss, Peter

(57) **Zusammenfassung**

Bei einem Fahrzeug mit einem Chassis (2), dem eine Antriebseinheit (10) zum Antrieb von zumindest zwei Rädern (7) an einer Radachse (5, 6) zugeordnet ist und einem Führerstand (4), soll die Antriebseinheit (10) drehbar und/oder kippbar auf dem Chassis (2) gelagert und/oder der Führerstand (4) gegenüber dem Chassis (2) um mehr als eine Achse (A, B, C, D) dreh- und/oder kippbar und/oder seitlich verschiebbar und/oder der einen Radachse (5, 6) zumindest eine weitere Radachse (5, 6) zugeordnet sein, wobei der Abstand (a) der Radachsen (5,6) zueinander veränderbar ist.

## Beschreibung

Die Erfindung betrifft ein Fahrzeug mit einem Chassis, dem eine Antriebseinheit zum Antrieb von zumindest zwei Rädern an einer Radachse zugeordnet ist und einem Führerstand.

### Stand der Technik

Derartige Fahrzeuge sind bereits in vielfältiger Form und Ausgestaltung bekannt und gebräuchlich. So wird beispielsweise in der DE 44 43 170 C1 eine Lademaschine beschrieben, bei welcher ein Ausleger aus zwei aneinander gekoppelten Hubgerüsten gebildet ist, die an deren vorderen Ende ein Tragstück zur Aufnahme eines Fahrerhauses aufweisen. Die Hubgerüste bestehen aus zwei Parallellenkergetrieben, die mittig über ein Verbindungsblech schwenkbar zueinander angeordnet sind. Die Verschwenkung erfolgt durch entsprechende Kolben-Zylinder-Anordnungen an den Parallellenkergetrieben.

Nachteilig hierbei ist, dass lediglich eine Vergrösserung des Verstellbereichs des Fahrerhauses nach oben und nach vorne vorgesehen ist. Insbesondere an Hängen bietet eine solche Lademaschine durch die Verstellbarkeit des Fahrerhauses keinen Vorteil. Darüber hinaus weist diese Lademaschine einen komplizierten Aufbau auf.

### Aufgabe der vorliegenden Erfindung

Aufgabe der vorliegenden Erfindung ist es, ein Fahrzeug anzubieten, dessen Führerstand in einem weitaus grösseren Umfang bewegtbar ist. Darüber hinaus soll das Fahrzeug insbesondere das Befahren von Gelände jeglicher Art möglich, einfacher und angenehmer machen.

### Lösung der Aufgabe

Zur Lösung der Aufgabe führt, dass die Antriebseinheit drehbar und/oder kippbar auf dem Chassis gelagert und/oder der Führerstand gegenüber dem Chassis um mehr als eine Achse dreh- und/oder kippbar und/oder seitlich verschiebbar und/oder der einen Radachse zumindest eine weitere Radachse zugeordnet ist, wobei der Abstand der Radachse zueinander veränderbar ist.

Bei den Achsen, durch welche der Führerstand gegenüber dem Chassis dreh - und/oder kippbar ist, handelt es sich bevorzugt um Längsachsen, zumindest eine Querachse sowie um eine Vertikalachse des Fahrzeuges. Hierdurch wird es möglich, das Fahrzeug in jedweder Richtung und mit jedweder Neigung fahren zu können, wobei der Führerstand selbst parallel zu einer waagrechten Ebene verbleiben. Gleichzeitig wird das Fahrzeug durch die Bewegungsmöglichkeiten des Führerstandes in allen Fahrtrichtungen ein vollwertiges Fahrzeug.

Der Führerstand ist insbesondere über einen Dreh- und Haltearm mit dem Chassis bzw. der Karosserie verbunden, welcher vorrangig dem Kippen und Schwenken des Führerstandes um die Längsachsen des Fahrzeuges dient. Hierzu ist der Dreh- und Haltearm bevorzugt mit einer entsprechenden Hydraulikeinheit versehen. Jedoch ist es auch denkbar, die Bewegungsvorgänge des Führerstandes elektrisch, pneumatisch, mechanisch oder sogar durch das Eigengewicht des Führerstandes bei einer Neigung zu regeln. In letzterem Falle wäre jedoch daran zu denken, eine geeignete Brems- bzw. Bewegungsbegrenzungseinheit für den Führerstand vorzusehen. Die unterschiedlichen Möglichkeiten der Erzeugung des Schwenk- und Kippvorganges sollen von der vorliegenden Erfindung umfasst sein.

Ferner ist auch daran gedacht, den Führerstand gegenüber dem Chassis seitlich verschiebbar auszugestalten. In diesem Fall ist es ebenfalls möglich, einem Baum oder anderen Hindernis auszuweichen. Desweiteren kann dann aber auch daneben eine Arbeitsgerätschaft angeordnet und bewegt werden, wie beispielsweise ein Arm eines Frontladers, ein Baggerarm od.dgl..

Der Dreh- und Haltearm ist ferner einends bevorzugt mit einer Tragfläche versehen, auf welcher der Führerstand aufliegt, um von der Tragfläche gestützt zu werden. Die Tragfläche ist auch drehbar und von dem Dreh- und Haltearm abhebbar mit diesem verbunden. Damit ermöglicht die Tragfläche die Drehung des Führerstandes um eine Vertikalachse des Fahrzeuges sowie das Kippen des Führerstandes um eine Querachse des Fahrzeuges. Die Antriebsmöglichkeiten für diese Bewegungsabläufe können ebenfalls ähnlich vielfältig sein, wie für den Schwenk- und Kippvorgang des Führerstandes um die Längsachsen des Fahrzeugs. Die unterschiedlichen Möglichkeiten sollen ebenfalls von der vorliegenden Erfindung umfasst sein.

Die Bewegungsabläufe für die einzelnen Schwenk-, Dreh- und Kippbewegungen des Führerstandes können bevorzugt auch während der Fahrt des Fahrzeuges erfolgen. Es ist jedoch selbstverständlich denkbar, den Führerstand bereits vor Fahrtantritt in etwa in die gewünschte Position zu bringen, die das Fahrzeug bei einem Befahren eines unebenen oder geneigten Geländes einnehmen wird, so dass später nur noch Feinjustierungen des Führerstandes vorgenommen werden müssen, um diesen waagerecht bzw. parallel zu einer Ebene zu halten.

Durch die Möglichkeit der Dreh- und Kippbarkeit des Führerstandes in die unterschiedlichen Richtungen kann ferner ein Ausweichen von Hindernissen, beispielsweise von einem Baum, welcher sich im Weg des Führerstandes befinden, erleichtert werden.

Die Antriebseinheit des Fahrzeuges weist bevorzugt einen Motor und eine Getriebeeinheit auf. Um die Kipp- und Drehbarkeit der Antriebseinheit in dem Fahrzeug zu gewährleisten, ist diese bevorzugt kardanisch in der Karosserie aufgehängt. Weiter Möglichkeiten der Anordnung der Antriebseinheit sind durchaus denkbar. Wichtig hierbei ist lediglich, dass eben diese Dreh- und Kippbarkeit in möglichst viele Richtungen ermöglicht wird. Somit kann das Fahrzeug erneut in jedwede Richtung und auf jedweder Neigung fahren, weil sich die Antriebseinheit zu jeder Zeit etwa waagerecht zu einer Ebene befindet, wie es auch für den Führerstand vorgesehen ist.

Durch die Bewegbarkeit der Antriebeinheit kann vor allem auch eine Gewichtsverlagerung erfolgen, was vor allem beim Befahren von Hängen sehr vorteilhaft ist. Hierdurch ist es möglich, mit dem erfindungsgemässen Fahrzeug wesentlich steilere Hänge zu befahren.

Auch wenn es denkbar ist, das Fahrzeug mit nur einer Radachse auszugestalten, so sind dennoch bevorzugt zwei Radachsen vorgesehen, denn durch die Möglichkeit der Veränderung des Abstandes zwischen diesen Radachse kann die Wendigkeit des Fahrzeuges insbesondere beim Wenden an einem Hang aber auch in der Ebene erhöht werden. Der Achsabstand zwischen den Radachsen muss lediglich verkleinert werden, schon wird der Wendekreis des Fahrzeuges erheblich kleiner.

Ferner ist daran gedacht, auch den Radabstand zwischen zwei Rädern veränderbar auszugestalten. Hierdurch kann beispielsweise Hindernissen auf der Strecke besser ausgewichen werden, ohne dass Fahrzeug als Ganzes ausweichen muss.

Die Räder sind bevorzugt einzeln antreibbar ausgestaltet. Hierbei kann vorgesehen sein, an dem Fahrzeug nur zwei Räder vorzusehen, welche beispielsweise in der Art wie bei einem Panzer ausgestaltet sein können. Es können jedoch auch mehr als zwei Räder vorgesehen sein. Die unterschiedlichen Möglichkeiten der Anzahl und Ausgestaltung der Räder sollen von der vorliegenden Erfindung umfasst sein.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Figur 1: eine schematische, vereinfacht dargestellte Seitenansicht eines Fahrzeugs gemäss der vorliegenden Erfindung;
- Figur 2: eine Draufsicht auf das Fahrzeug nach Figur 1;
- Figur 3: eine Frontansicht des Fahrzeuges nach Figur 1;
- Figur 4: eine Frontansicht des Fahrzeuges nach Figur 1 in einer Gebrauchslage an einem Hang; und
- Figur 5: eine Seitenansicht des Fahrzeuges nach Figur 1 in einer weiteren Gebrauchslage an einem Hang.

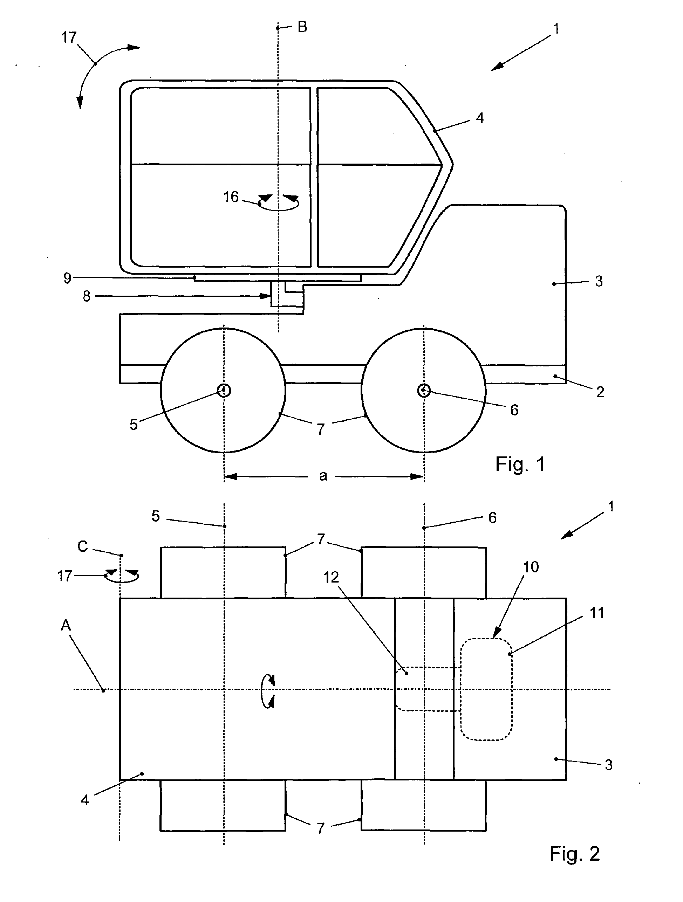

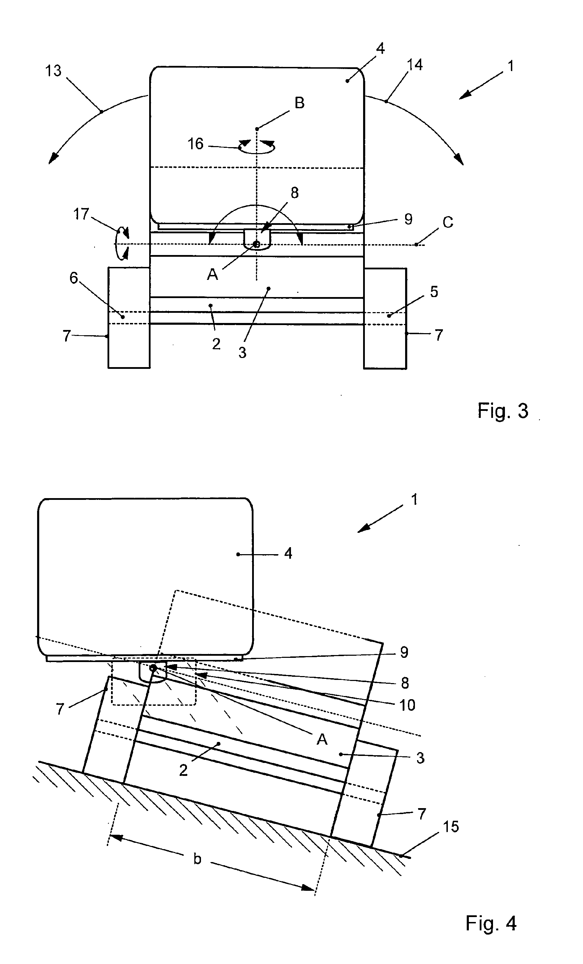

Gemäss Figur 1 weist ein Fahrzeug 1 ein Chassis 2, eine Karosserie 3 sowie einen Führerstand 4 auf. An dem Chassis 2 sind über zwei Radachsen 5 und 6 insgesamt vier Räder 7 befestigt. Die Radachsen 5 und 6 halten einen Abstand a zueinander ein. Die Räder 7 halten zwischen sich gemäss Figur 4 einen Abstand b ein. Beide Abstände a bzw. b sind je nach Gebrauchslage des Fahrzeuges 1 veränderbar. Die Räder 7 selbst sind bevorzugt einzeln antreibbar ausgestaltet.

Der Führerstand 4 ist über einen Dreh- und Haltearm 8 mit der Karosserie 3 bzw. dort mit einer nicht näher gezeigten Hydraulik-oder Elektroeinheit auf nicht näher gezeigte Art verbunden. Der Dreh- und Haltearm 8 ist einends mit einer verbreiterten Tragfläche 9 zum Tragen des Führerstandes 4 versehen.

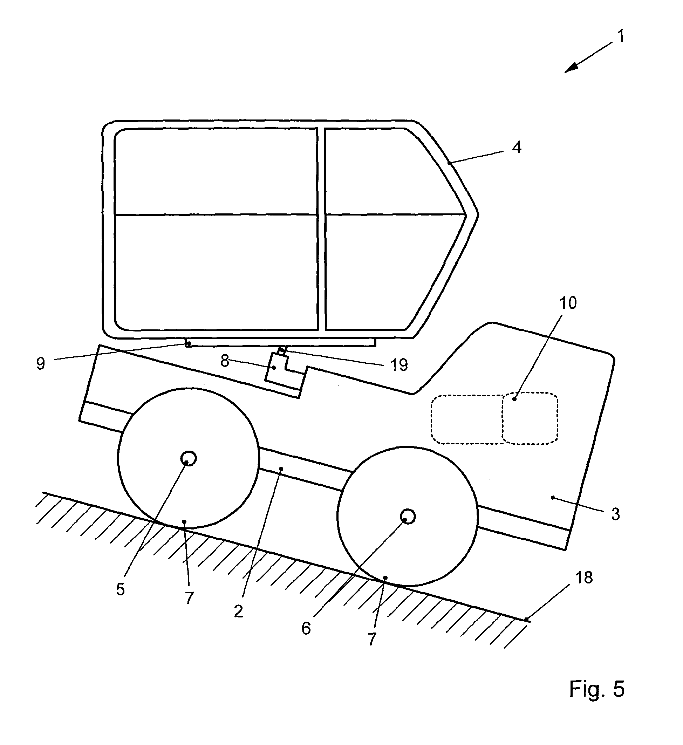

Der Führerstand 4 ist mittels dieses Dreh- und Haltearmes 8 bzw. der Tragfläche 9 fast allseits beweglich ausgestaltet. So ist die Tragfläche 9 gegenüber dem Dreh- und Haltearm 8 zum einen entsprechend dem Doppelteil 16 um eine vertikale Achse B drehbar ausgestaltet. Zum anderen lässt sich die Tragfläche 9 mittels hydraulischer Kraft, wie in Figur 5 angedeutet, von dem Dreh- und Haltearm 8 abheben. Insbesondere aber ist er um Längsachsen A und D des Fahrzeuges 1 gegenüber diesem in Richtung von Pfeilen 13 und 14 und/oder um eine Querachse C des Fahrzeuges 1 in Richtung eines Pfeils 17 dreh-, schwenk- und/oder kippbar.

Dem Chassis 2 bzw. der Karosserie 3 ist weiterhin eine Antriebseinheit 10 zugeordnet, welche einen Motor 11 sowie eine Getriebeeinheit 12 aufweist. Die Antriebseinheit 10 ist dabei ebenfalls um die Längsachse D drehbar und/oder auch in anderen Richtungen bewegbar in der Karosserie 3 bzw. auf dem Chassis 2 gelagert.

### Die Funktionsweise der vorliegenden Erfindung ist folgende:

Die Figuren 1 bis 3 zeigen einen Ausgangszustand des Fahrzeuges 1, in welchem sich sowohl der Führerstand 4 als auch die Antriebseinheit 10 in normaler Gebrauchslage bzw. im Fahrzustand auf einer Strasse oder einem Weg befinden.

Fertig dass Fahrzeug 1 nun von der Strasse ab beispielsweise auf einer Wiese, um diese zu mähen, so kann beispielsweise der Abstand a der Radachsen 5 und 6 zueinander vergrössert werden, damit das Fahrzeug 1 trotz unebenem Gelände in sicherer Gebrauchslage bleibt. Soll dabei beispielsweise nahe von einem Baum gemäht werden, so kann es vorkommen, dass der Führerstand 4 die Fahrt stört, sodass das Fahrzeug 1 dem Baum ausweichen müsste. Mit dem erfindungsgemässen Fahrzeug 1 ist es jedoch möglich, dass der Führerstand 4 aus dem Bereich des Baumes seitlich ausgeschwenkt wird, der Fahrer aber in seiner normalen Sitzposition, nur eben seitlich versetzt zum Fahrzeug 1 verbleibt. In diesem Fall kann der Dreh-und Haltearm 8 vor allem parallelogrammartig ausgestaltet sein.

Fährt das Fahrzeug 1 nun einem Hang 15 parallel entlang, so nimmt der Führerstand 4 die in Figur 4 gezeigte Position ein. In dieser ist der Führerstand 4 entsprechend der Hangneigung in Richtung des Pfeils 13 derart um die Längsachse A gekippt, dass der Führerstand 4 seine Position parallel zu einer waagrechten Ebene beibehält. Über den Dreh- und Haltearm 8 ist allerdings der Führerstand 4 aus dem Bereich des Chassis 3 seitlich ausgeschwenkt. Lediglich das Chassis 2, die Karosserie 3 sowie die Räder 7 stehen parallel zu dem Hang 15.

Des weiteren wird die Antriebseinheit 10 in der Karosserie 3 bzw. dem Chassis 2 derart gekippt, dass sie sich parallel zu dem Führerstand 4 bzw. ebenfalls in der Waagrechten befindet.

Soll das Fahrzeug 1 am Hang 15 beispielsweise gewendet werden, so kann der Abstand a zwischen den Radachsen 5 und 6 in gewünschter Weise verringert werden, wodurch das Fahrzeug 1 einen geringeren Wendekreis erlangt. Nach dem Wenden des Fahrzeugs 1 kann der Abstand a zwischen den Radachsen 5 und 6 wieder vergrössert werden.

Gleichzeitig mit dem Wenden wird der Führerstand 4 in Richtung der Pfeile 13 und 14 um die Längsachsen A und D gedreht bzw. gekippt, so dass er beim und nach dem Wenden seine etwa waagrechte Position beibehält, wohingegen die übrigen Fahrzeugelemente am Hang 15 verschiedene Lagen einnehmen können.

Die Antriebseinheit 10 in der Karosserie 3 bzw. auf dem Chassis 2 wird ebenfalls derart gekippt, dass sie sich immer im wesentlichen entsprechend dem Führerstand 4 bewegt.

Neben der Veränderung des Abstandes a kann auch der Abstand b zwischen den Radachsen 5 bzw. 6 selbst vergrössert bzw. verringert werden, um beispielsweise Hindernissen auf der Strecke besser ausweichen zu können, ohne dass Fahrzeug 1 als ganzes ausweichen zu lassen.

Gemäss Figur 5 wird die Position des Fahrzeuges 1 gezeigt, wenn dieses einen Hang 15 hinunterfährt. Damit der Führerstand 4 erneut seine Position bezüglich einer waagrechten Ebene beibehalten kann, wird er um die Längsachse C in Richtung des Pfeils 17 gekippt. Dies erfolgt mittels einer entsprechenden Hydraulikeinheit, welche zwischen dem Dreh- und Haltearm 8 und der Tragfläche 9 vorgesehen ist und von welcher lediglich eine Kolbenstange 19 zu sehen ist. Die verbleibenden Fahrzeugelemente verbleiben erneut parallel zum Hang 18.

Die Antriebseinheit 10 in der Karosserie 3 bzw. dem Chassis 2 wird ebenfalls derart gekippt, dass sie sich etwa entsprechend zu dem Führerstand 4 bewegt.

Fährt das Fahrzeug 1 den Hang 15 wieder nach oben, so muss der Führerstand 4 nur um die vertikale Achse B des Fahrzeuges 1 in Richtung des Pfeils 16 gedreht werden. Hierdurch verbleibt der Führerstand 4 in einer Position, welche waagrecht zu einer Ebene verläuft, wohingegen die übrigen Fahrzeugelemente nach wie vor parallel zum Hang 15 stehen.

Soll das Fahrzeug 1 aus den oben genannten Positionen an dem Hang 15 wieder in eine Ebene verfahren werden, so muss der Führerstand 4 lediglich entlang den Längsachsen A und/oder B und/oder C und/oder D des Fahrzeuges 1 gedreht und/oder gekippt werden, bis er sich parallel zu der Ebene befindet. Das Chassis 2, die Karosserie 3 sowie die Räder 7 befinden sich dann bereits in der Ebene. Die Antriebseinheit 10 gelangt ebenfalls in ihre Ausgangsposition zurück.

**Bezugszeichenliste**

| | | | | | |
|---|---|---|---|---|---|
| 1 | Fahrzeug | 34 | | 67 | |
| 2 | Chassis | 35 | | 68 | |
| 3 | Karosserie | 36 | | 69 | |
| 4 | Führerstand | 37 | | 70 | |
| 5 | Radachse | 38 | | 71 | |
| 6 | Radachse | 39 | | 72 | |
| 7 | Räder | 40 | | 73 | |
| 8 | Dreh- und Haltearm | 41 | | 74 | |
| 9 | Tragfläche | 42 | | 75 | |
| 10 | Antriebseinheit | 43 | | 76 | |
| 11 | Motor | 44 | | 77 | |
| 12 | Getriebeeinheit | 45 | | 78 | |
| 13 | Pfeil | 46 | | 79 | |
| 14 | Pfeil | 47 | | | |
| 15 | Hang | 48 | | | |
| 16 | Pfeil | 49 | | | |
| 17 | Pfeil | 50 | | | |
| 18 | | 51 | | | |
| 19 | Kolbenstange | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Fahrzeug mit einem Chassis (2), dem eine Antriebseinheit (10) zum Antrieb von zumindest zwei Rädern (7) an einer Radachse (5, 6) zugeordnet ist und einem Führerstand (4),
**dadurch gekennzeichnet, dass**
die Antriebseinheit (10) drehbar und/oder kippbar auf dem Chassis (2) gelagert ist und/oder der Führerstand (4) gegenüber dem Chassis (2) um mehr als eine Achse (A, B, C, D) dreh- und/oder kippbar und/oder seitlich verschiebbar und/oder der einen Radachse (5, 6) zumindest eine weitere Radachse (5, 6) zugeordnet ist, wobei der Abstand (a) der Radachsen (5,6) zueinander veränderbar ist.

2. Fahrzeug nach Anspruch 1, **dadurch gekennzeichnet, dass** die Antriebseinheit einen Motor (11) und eine Getriebeeinheit (12) aufweist, die um Achsen schwenk- bzw. kippbar sind.

3. Fahrzeug nach Anspruch 1 oder 2, **dadurch gekennzeichnet, dass** der Führerstand (4) über einen Dreh- und Haltearm (8) mit dem Chassis (2) verbunden ist.

4. Fahrzeug nach Anspruch 3, **dadurch gekennzeichnet, dass** der Dreh- und Haltearm (8) einends mit einer Tragfläche (9) zum Tragen des Führerstandes (4) versehen ist.

5. Fahrzeug nach Anspruch 3 oder 4, **dadurch gekennzeichnet, dass** der Führerstand (4) bzw. die Tragfläche (9) gegenüber dem Dreh- und Haltearm (8) drehbar ausgestaltet ist.

6. Fahrzeug nach wenigstens einem der Ansprüche 3 bis 5, **dadurch gekennzeichnet, dass** der Führerstand (4) bzw. die Tragfläche (9) von dem Dreh- und Haltearm (8) abhebbar ist.

7. Fahrzeug nach wenigstens einem der Ansprüche 1 bis 6, **dadurch gekennzeichnet, dass** der Führerstand (4) um Längsachsen (A, D) und/oder um eine vertikale Achse (B) und/oder um die Querachse (C) dreh- und/oder kippbar ist.

8. Fahrzeug nach wenigstens einem der Ansprüche 1 bis 7, **dadurch gekennzeichnet, dass** die Räder (7) einzeln antreibbar ausgestaltet sind.

9. Fahrzeug nach wenigstens einem der Ansprüche 1 bis 8, **dadurch gekennzeichnet, dass** ein Abstand (b) der Räder (7) zueinander veränderbar ist.
